# EUROPEAN PATENT APPLICATION

(11) **EP 4 752 797 A1**
(43) Date of publication of application: **03.06.2026**
(21) Application number: 24845334.2
(22) Date of filing: 02.07.2024
(51) Int. Cl.: G06Q 10/06

(54) **SYSTEM INTRODUCTION SUPPORT DEVICE, SYSTEM INTRODUCTION SUPPORT METHOD, AND SYSTEM INTRODUCTION SUPPORT PROGRAM**

(30) Priority: 27.07.2023 JP 2023122854
(71) Applicant: Hitachi, Ltd., Tokyo 100-8280 (JP)
(72) Inventor: SAKURAI, Soki, Tokyo 100-8280 (JP); KATO, Seiya, Tokyo 100-8280 (JP); IKEDA, Takahiro, Tokyo 100-8280 (JP); URAWAKI, Koji, Tokyo 100-8280 (JP)
(74) Representative: MERH-IP Matias Erny Reichl Hoffmann Patentanwälte PartG mbB
(86) International application number: PCT/JP2024/023981
(87) International publication number: WO 2025/022952

(57) **Abstract**

The present invention makes it possible to easily and appropriately provide a user with selectable requirements for a target system to be implemented. A system implementation support apparatus 100 for supporting selection of requirements when a target system is implemented comprises a CPU 201 and a storage 205. The storage 205 is configured to store, for the target system, a plurality of candidate requirement sets each including system configuration information indicating a system configuration, a safety level in the system configuration, and operational requirement information including one or more operational requirements in the system configuration. The CPU 201 is configured to calculate a cost and productivity and/or convenience for each of the candidate requirement sets, and display, for each of the candidate requirement sets in an identifiable manner, a combination of the cost, productivity and/or convenience, and the safety level in the system configuration, as trade-off factors.

## Description

### [Technical Field]

The present invention relates to a technology for supporting the implementation of a predetermined target system.

### [Background Art]

For example, an autonomous driving system is generally expected to be implemented for applications such as passenger transportation or logistics as an alternative to manned driving, and various demonstration experiments are being conducted. When implementing autonomous driving for such applications, it is necessary to comprehensively evaluate the advantages of adopting autonomous driving over manned driving, taking into account viewpoints such as productivity achieved as a result of implementation, costs required for construction and operation, and necessary safety measures. For this reason, it is envisaged that a PoC (Proof of Concept) is conducted prior to practical implementation to verify these viewpoints.

In general system development, various system requirements are defined based on customer demands, and design and implementation proceed based on these requirements. However, it is often the case that deficiencies or excesses in requirements become apparent after the system begins actual operation. In such cases, additional costs, such as financial costs for hardware or software development, or time-related costs for system updates, are incurred.

In the case of an autonomous driving system, as mentioned above, a PoC is envisaged, and it is possible to modify parts of the system based on PoC results before finalizing the system. However, considering modification costs and opportunity losses due to modification periods, it is necessary to define system requirements that minimize rework costs as much as possible to enable a swift transition to the practical implementation phase after the PoC.

As a technology for configuring a system in consideration of such changes in requirements, for example, PTL 1 discloses a method for estimating temporal changes in requirements that may occur in the future for a system under development based on past cases and outputting a system configuration proposal that satisfies the requirements according to the change scenario.

### [Citation List]

### [Patent Literature]

[PTL 1]
Japanese Patent Application Publication No. 2018-49361

### [Summary of Invention]

### [Technical Problem]

For example, according to the technology of PTL 1, in the development of a new system, it is possible to take into account temporal changes in requirements based on past cases and to generate a system configuration proposal with sufficient capacity to respond to changes.

On the other hand, in defining requirements for a system such as an autonomous driving system, it is necessary to consider multiple trade-off factors, such as affordable costs, desired productivity, ensuring safety through the system, and operation-related measures. Since it is impossible to generate requirements that satisfy all these factors, verification through PoC and consensus-building with customers is necessary.

Moreover, for systems related to safety, such as autonomous driving systems, additional costs, such as for safety analysis, are required due to system modifications. Therefore, it is necessary to define requirements to minimize additional development costs after PoC.

The present invention has been made in view of the above circumstances, and its object is to provide a technology capable of easily and appropriately providing a user with selectable requirements for a target system to be implemented.

### [Solution to Problem]

To achieve the above object, a system implementation support apparatus according to one aspect is a system implementation support apparatus for supporting selection of requirements when a target system is implemented, includes a processor and a storage device. The storage device is configured to store, for the target system, a plurality of candidate requirement sets, each including system configuration information indicating a system configuration, a safety level in the system configuration, and operational requirement information including one or more operational requirements in the system configuration. The processor is configured to calculate a cost and productivity and/or convenience for each of the candidate requirement sets, and display, for each of the candidate requirement sets in an identifiable manner, a combination of the cost, productivity and/or convenience, and the safety level in the system configuration, as trade-off factors.

### [Advantageous Effects of Invention]

According to the present invention, selectable requirements for a target system to be implemented can be easily and appropriately provided to a user.

### [Brief Description of Drawings]

[Fig. 1A]

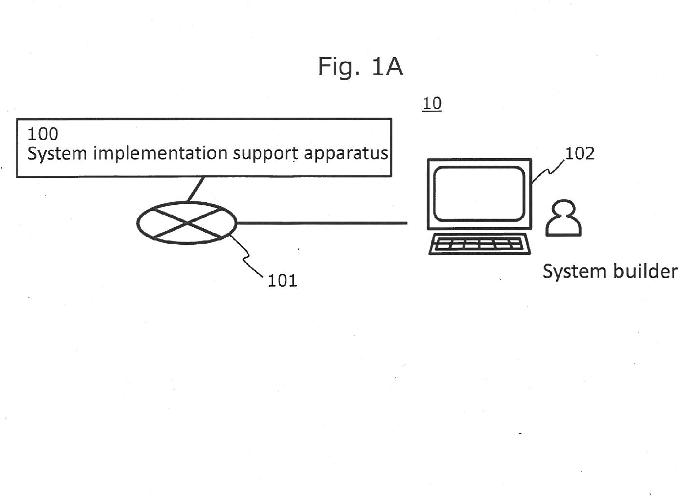

   Fig. 1A is a diagram illustrating a configuration example of a system implementation support system according to one embodiment.
[Fig. 1B]

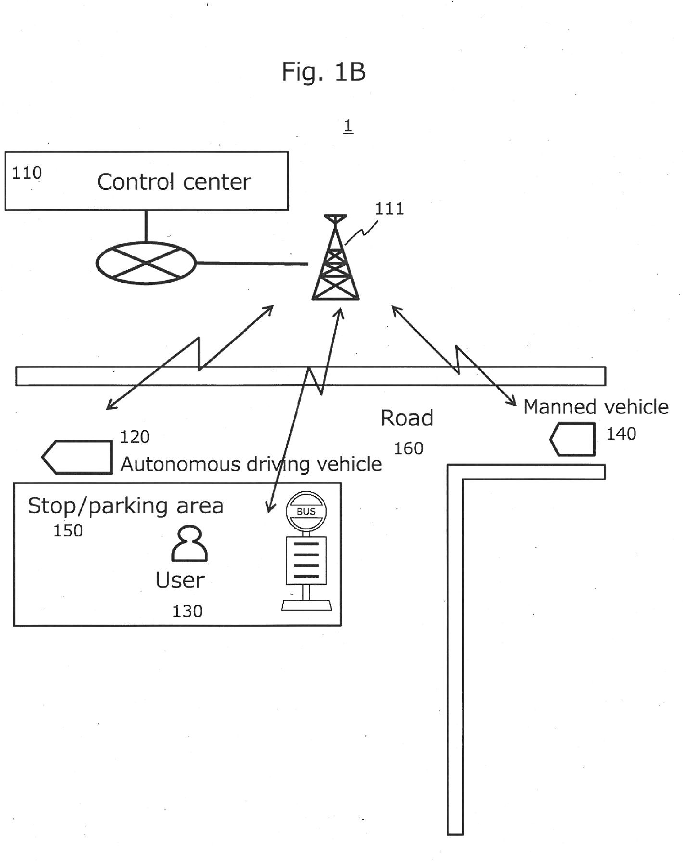

   Fig. 1B is a diagram illustrating a configuration example of an autonomous driving system, which is a target for implementation consideration, according to one embodiment.
[Fig. 2]

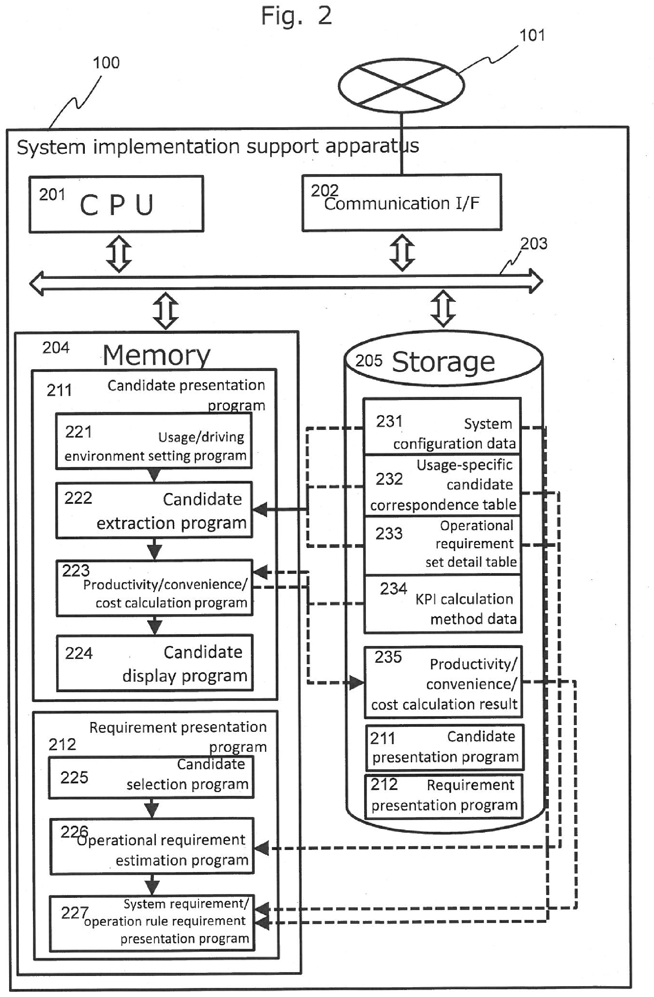

   Fig. 2 is a diagram illustrating a configuration example of a system implementation support apparatus according to one embodiment.
[Fig. 3A]

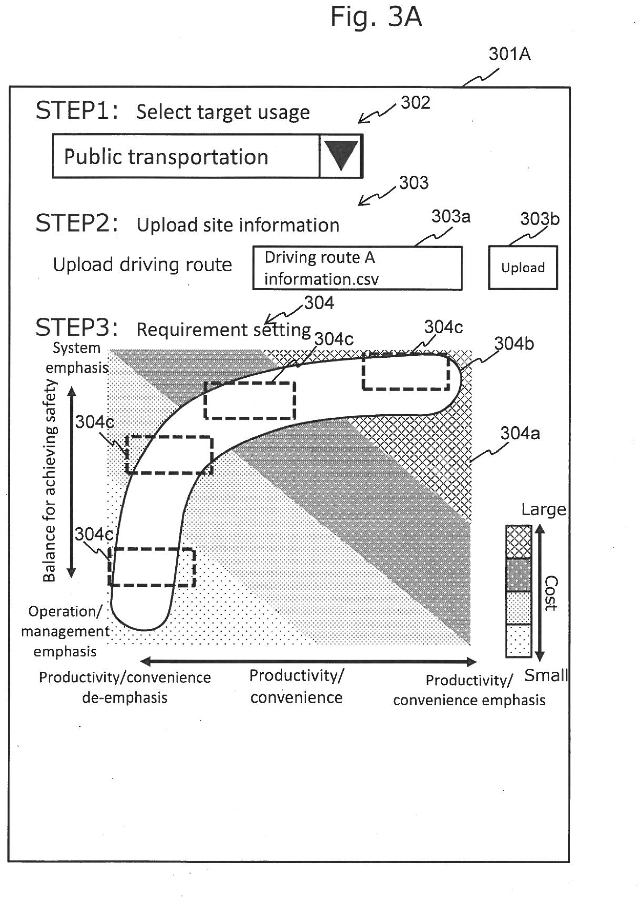

   Fig. 3A is a diagram explaining a first example of an input screen according to one embodiment.
[Fig. 3B]

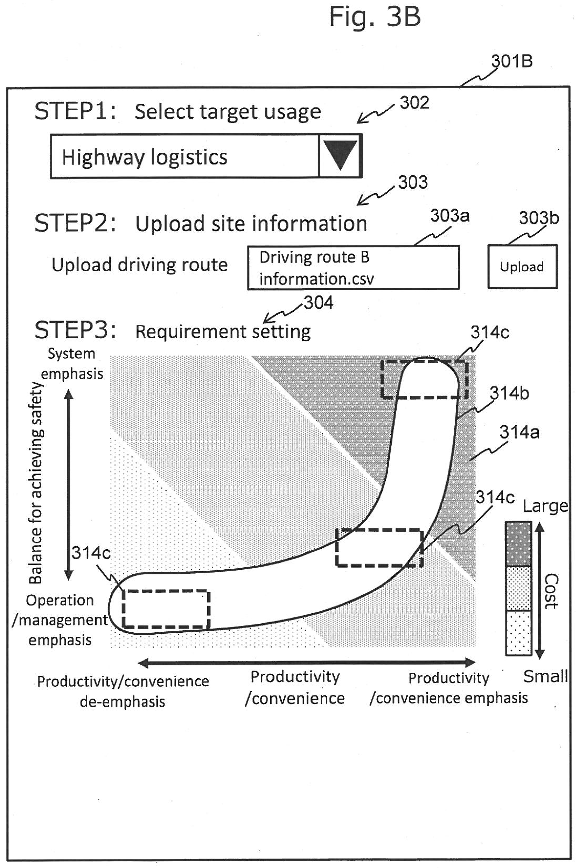

   Fig. 3B is a diagram explaining a second example of an input screen according to one embodiment.
[Fig. 3C]

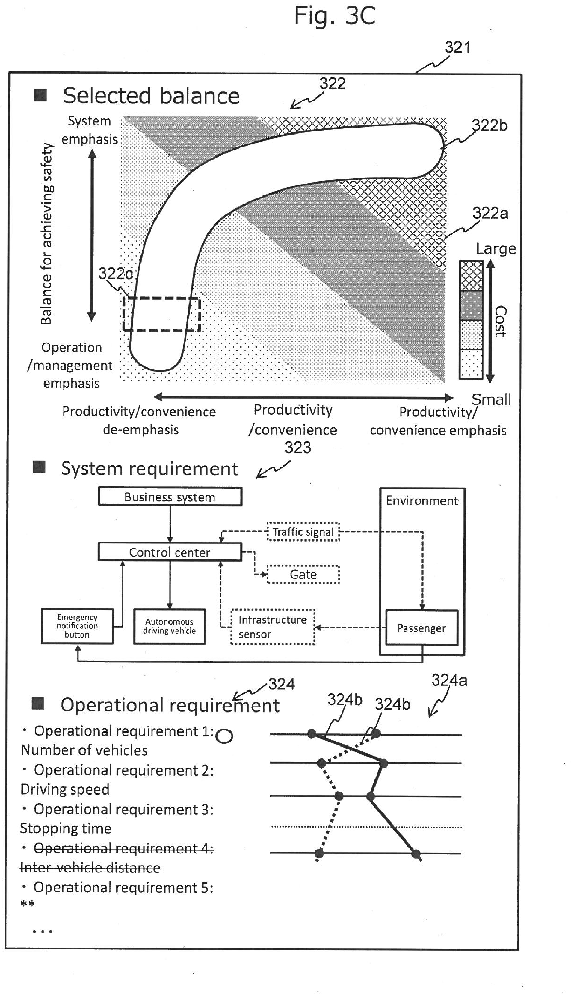

   Fig. 3C is a diagram explaining an example of an output screen according to one embodiment.
[Fig. 4A]

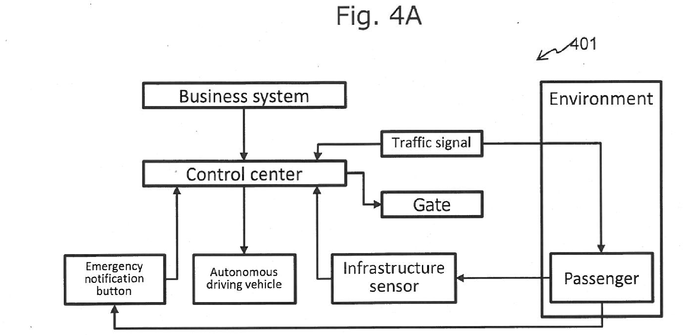

   Fig. 4A is a diagram illustrating a first example of system configuration data according to one embodiment.
[Fig. 4B]

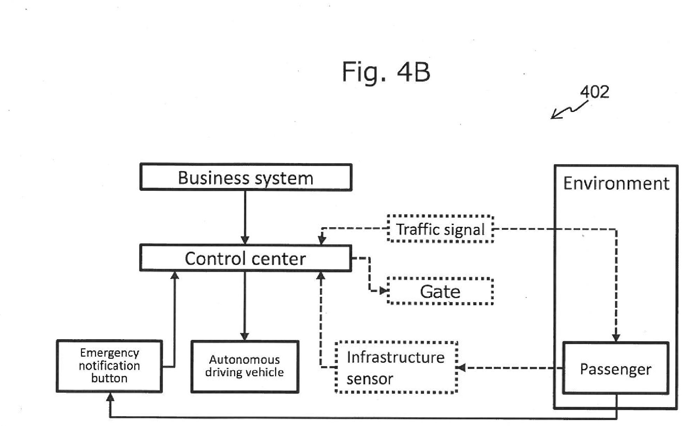

   Fig. 4B is a diagram illustrating a second example of system configuration data according to one embodiment.
[Fig. 5A]

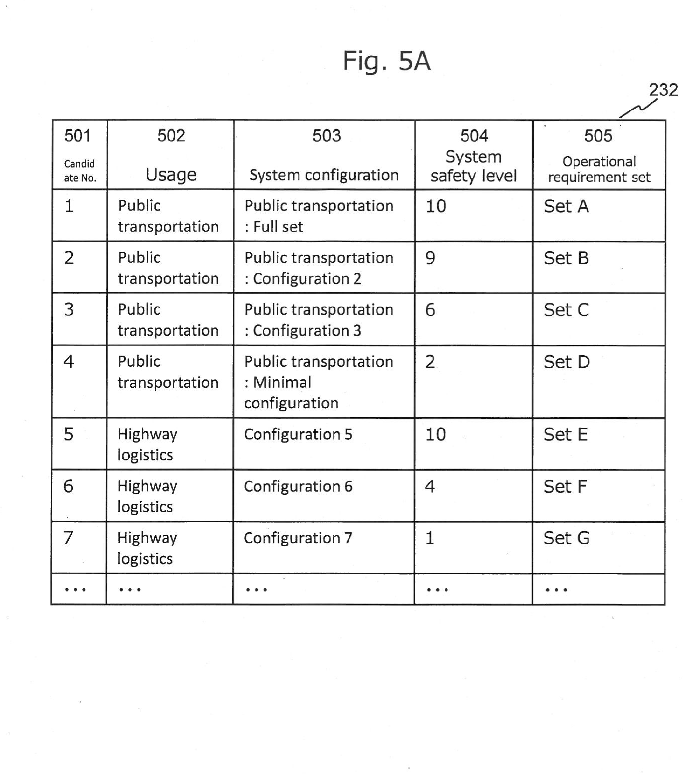

   Fig. 5A is a diagram illustrating an example of a usage-specific candidate correspondence table according to one embodiment.
[Fig. 5B]

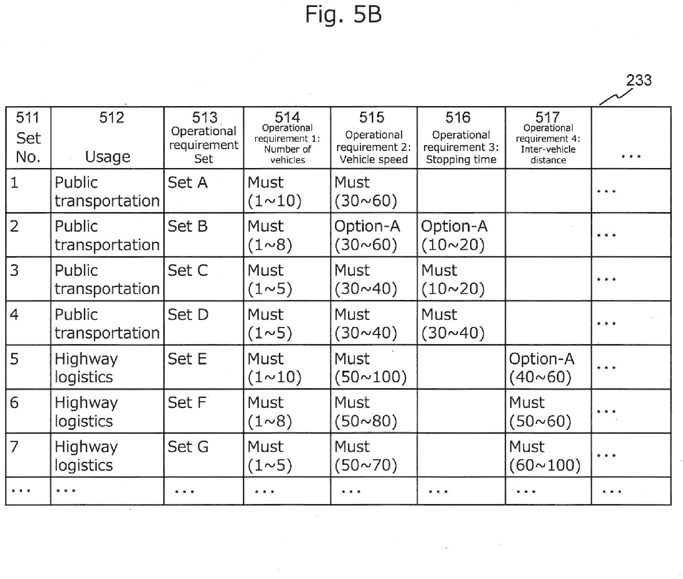

   Fig. 5B is a diagram illustrating an example of an operational requirement set detail table according to one embodiment.
[Fig. 6]

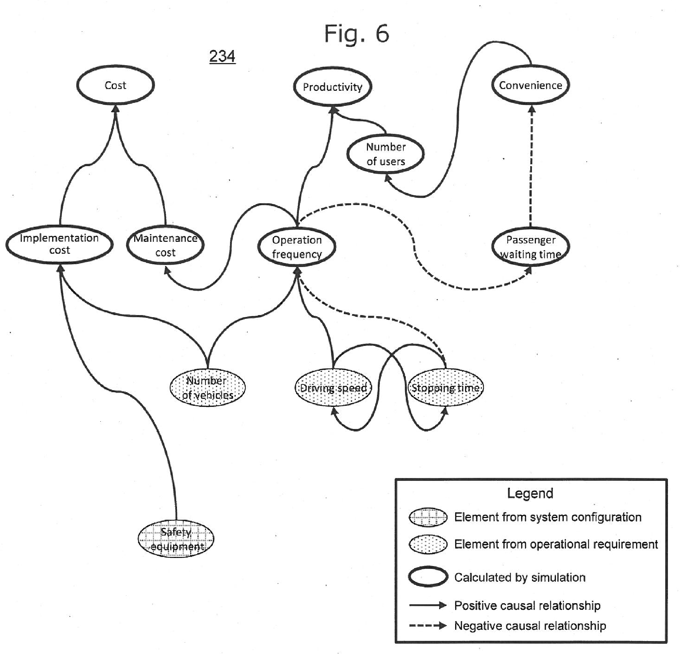

   Fig. 6 is a diagram illustrating an example of KPI calculation method data according to one embodiment.
[Fig. 7]

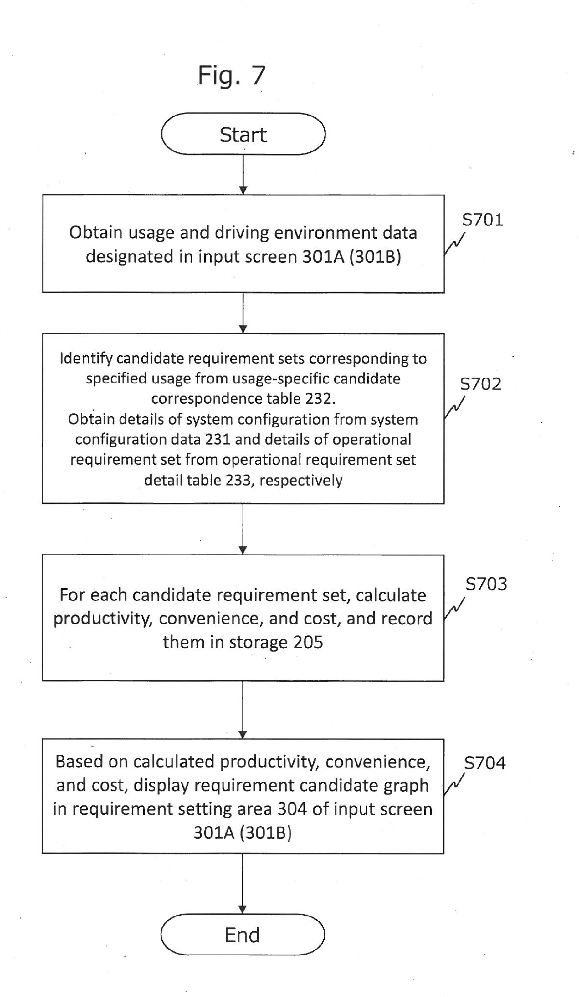

   Fig. 7 is a flowchart of candidate presentation processing according to one embodiment.
[Fig. 8]

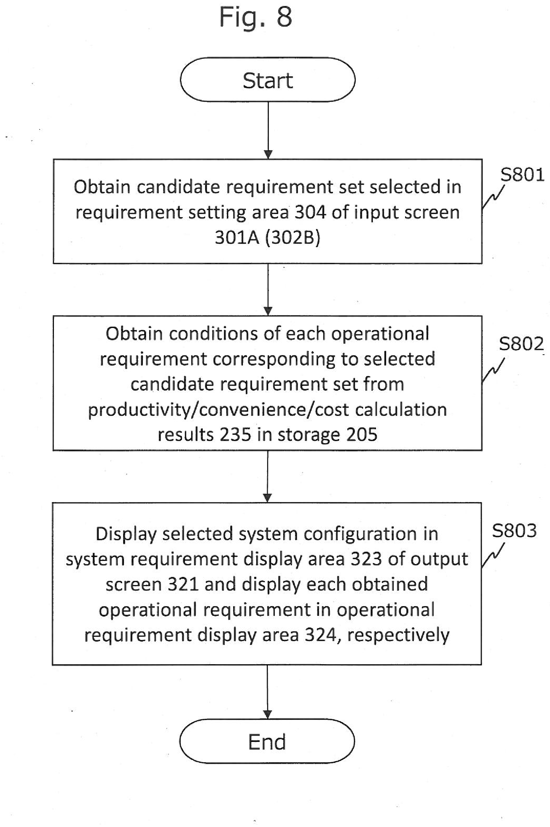

   Fig. 8 is a flowchart of requirement presentation processing according to one embodiment.

### [Description of Embodiments]

Embodiments will be described with reference to the drawings. The embodiments described below do not limit the invention according to the claims, and not all elements or combinations thereof described in the embodiments are necessarily essential to the solution means of the invention.

In the following description, information may be described by the expression "AAA table," but the information may be expressed in any data structure. That is, to indicate that the information is not dependent on the data structure, an "AAA table" can be referred to as "AAA information."

In the following description, processing may be described taking a "program" as an operating entity. However, since a program is executed by a processor to perform predetermined processing using at least one of a storage unit and an interface unit as appropriate, the operating entity of the processing may be the processor (or a computer (apparatus) or computer system having a processor). The program may be installed in the computer from a program source. The program source may be, for example, a program distribution server or a computer-readable recording medium. In the following description, two or more programs may be realized as a single program, or a single program may be realized as two or more programs. Additionally, at least part of the processing realized by the execution of the program may be realized by a hardware circuit (e.g., ASIC (Application Specific Integrated Circuit) or FPGA (Field-Programmable Gate Array)).

Fig. 1A is a diagram illustrating a configuration example of a system implementation support system according to one embodiment.

The system implementation support system 10 includes a system implementation support apparatus 100 and a terminal 102. The system implementation support apparatus 100 and the terminal 102 are coupled via a network 101. The network 101 is, for example, a communication path such as a wired LAN (Local Area Network), wireless LAN, or WAN (Wide Area Network). The system implementation support apparatus 100 performs processing to support the implementation of an autonomous driving system, which is an example of a target system to be implemented (e.g., processing to support requirement selection). The terminal 102 is an apparatus used by a system builder (also simply referred to as a user) of the autonomous driving system, displaying various pieces of information from the system implementation support apparatus 100 and receiving various operation inputs from the system builder to notify the system implementation support apparatus 100. Note that the system builder may directly use the system implementation support apparatus 100, in which case the system implementation support system 10 may not include the terminal 102.

Fig. 1B is a diagram illustrating a configuration example of an autonomous driving system, which is a target for implementation consideration, according to one embodiment.

The autonomous driving system 1 as an example of a target system to be implemented is a system that manages the autonomous driving of an autonomous driving vehicle 120, which is an example of a mobile object. The autonomous driving system 1 includes a control center 110, a base station 111, an autonomous driving vehicle 120, a stop/parking area 150, and the like. The base station 111 is, for example, a base station constituting a mobile phone network, relaying communications between the autonomous driving vehicle 120, a manned vehicle 140, infrastructure at the stop/parking area 150, and the control center 110. The control center 110 monitors and manages the operation status of the autonomous driving vehicle 120.

The autonomous driving vehicle 120 travels on roads 160 in a target area for implementation, circulating through stop/parking areas 150. On the roads 160, manned vehicles 140 also travel in addition to the autonomous driving vehicle 120. Users 130 of the autonomous driving system 1 board and alight from the autonomous driving vehicle 120 at the stop/parking area 150. The autonomous driving vehicle 120 operates while avoiding contact with manned vehicles 140, pedestrians, traffic signals, utility poles, and other infrastructure.

Next, the system implementation support apparatus 100 will be described in detail.

Fig. 2 is a diagram illustrating a configuration example of a system implementation support apparatus according to one embodiment.

The system implementation support apparatus 100 is configured, by a computer such as a general-purpose personal computer or a server, including a CPU 201, a communication interface (I/F: Interface) 202, a memory 204, a storage 205 as an example of a storage device, and an internal bus 203 connecting these components.

The communication I/F 202 is, for example, an interface such as a wired LAN card or a wireless LAN card, communicating with other devices (e.g., terminal 102) via the network 101.

The CPU 201, as an example of a processor, executes various processes according to programs stored in the memory 204 and/or the storage 205.

The memory 204 is, for example, a RAM (Random Access Memory), storing programs executed by the CPU 201 and necessary information. Programs pre-installed in the storage 205 are loaded into the memory 204 by the CPU 201, and the loaded programs are executed by the CPU 201.

The storage 205 is, for example, a hard disk or a flash memory, storing programs to be executed by the CPU 201 and data to be used by the CPU 201. In this embodiment, the storage 205 stores a candidate presentation program 211, a requirement presentation program 212, system configuration data 231, a usage-specific candidate correspondence table 232, an operational requirement set detail table 233, KPI calculation method data 234, and productivity/convenience/cost calculation results 235. Details of the tables and data will be described later. In this embodiment, the candidate presentation program 211 and the requirement presentation program 212 correspond to a system implementation support program.

The candidate presentation program 211 includes a usage/driving environment setting program 221, a candidate extraction program 222, a productivity/convenience/cost calculation program 223, and a candidate display program 224. Details of the processes executed by these programs will be described later.

The requirement presentation program 212 includes a candidate selection program 225, an operational requirement estimation program 226, and a system requirement/operation rule requirement presentation program 227. Details of the processes executed by these programs will be described later.

Although Fig. 2 shows an example in which the system implementation support apparatus 100 is configured as a single device, the system implementation support apparatus 100 may be configured with multiple devices. For example, the storage 205 may be a database server separate from a device having a CPU.

Next, input screens 301 (301A, 301B) displayed, for example, on the terminal 102, for inputting various pieces of information to be sent to the system implementation support apparatus 100 and displaying information from the system implementation support apparatus 100 will be described.

Fig. 3A is a diagram explaining a first example of an input screen according to one embodiment. The input screen 301A in Fig. 3A is a display example when public transportation is selected as the usage for the autonomous driving system.

The input screen 301A includes a target usage selection area 302, a site information upload area 303, and a requirement setting area 304.

The target usage selection area 302 is an area for receiving, from the system builder, a selection of the usage for the autonomous driving system 1, which is the target for implementation. The usage selection may be received, for example, from a dropdown list or as free-text input. Here, the usage may be any usage applicable to the autonomous driving system 1, such as "public transportation" related to passenger transportation or "highway logistics" related to logistics operations.

The site information upload area 303 is an area for receiving a designation of uploading driving route information (driving environment data: mobility environment data), including a file name reception area 303a and an upload button 303b. Here, the driving route information refers to information about roads, surrounding maps, terrain, etc., in the target area (site) of the autonomous driving system 1.

The file name reception area 303a is an area for receiving, from the system builder, the file name of a file containing driving route information. The upload button 303b is a button for receiving an instruction to upload the file with the file name received in the file name reception area 303a to the system implementation support apparatus 100. When the upload button 303b is pressed, the terminal 102 uploads the file with the file name received in the file name reception area 303a to the system implementation support apparatus 100. Based on this, in the system implementation support apparatus 100, the CPU 201 activates and executes the candidate presentation program 211.

The requirement setting area 304 is an area for displaying a requirement candidate graph (e.g., requirement candidate graph 304a) showing candidate requirements selectable for the usage selected in the target usage selection area 302. Note that the requirement candidate graph is a graph created by the candidate presentation program 211 (strictly speaking, by the CPU 201 executing the candidate presentation program 211). If the usage selection in the target usage selection area 302 and the upload of driving route information have not been performed, the processing by the candidate presentation program 211 is not executed, so no requirement candidate graph is displayed in this area.

When the candidate presentation program 211 is activated, as a result of processing by this program, a requirement candidate graph 304a showing safety, productivity, convenience, and cost is displayed in the requirement setting area 304. The requirement candidate graph 304a displays a plurality of candidate areas 304c corresponding to system requirement/operation rule requirement sets (candidate requirement sets) to be described later, which are candidates for the selected usage.

The requirement candidate graph 304a is, for example, a two-dimensional map, with the vertical axis (first axis) indicating the balance between system requirements and operation rule requirements for achieving safety. The upward direction of the vertical axis represents requirements that, when achieving safety of the autonomous driving system 1, ensure safety from the system perspective, such as hardware and software, whereas the downward direction represents requirements that ensure safety from operation or rule-based perspectives, rather than from the system perspective. For example, among the candidate system requirement/operation rule requirement sets, a candidate that ensures safety by equipping all autonomous driving vehicles with maximum-configuration sensors and installing maximum-configuration infrastructure, such as traffic signals or crossing gates, is displayed at the top of the requirement candidate graph 304a. In contrast, a candidate that minimizes sensors and infrastructure in autonomous driving vehicles and ensures safety through operation or rule-based measures, such as speed limits or securing safety confirmation time, is displayed at the bottom of the requirement candidate graph 304a.

The horizontal axis (second axis) of the requirement candidate graph 304a indicates the level of productivity and/or convenience achieved by the system requirement/operation rule requirement set. For example, when targeting both productivity and convenience, the position on the horizontal axis may be determined according to the result of performing a predetermined calculation (multiplication, addition, and other arbitrary operations) on these values. When targeting only one of productivity or convenience, the position on the horizontal axis may be determined according to that value. The rightward direction of the horizontal axis indicates relatively high productivity and/or convenience, while the leftward direction indicates relatively low productivity and/or convenience. For example, in a system requirement/operation rule requirement set that can efficiently ensure safety through sensor installation or infrastructure, smooth vehicle operation makes it possible to ensure high productivity and/or convenience, so this candidate is displayed on the right side of the requirement candidate graph 304a. Conversely, in a candidate system requirement/operation rule requirement set that relies primarily on operation or rule-based measures, such as speed limits or securing stopping time, with minimal sensors or infrastructure that can ensure safety, productivity and/or convenience are restricted, so this candidate is displayed on the left side of the requirement candidate graph 304a.

The background (plane of the graph) of the requirement candidate graph 304a is displayed in a manner that allows recognition of the cost required to realize (implement) the system requirement/operation rule requirement set. The manner of recognizing the cost may include dividing the area by cost and coloring it differently or using a heatmap. The cost required to realize (implement) the system requirement/operation rule requirement set mainly includes, as factors attributable to the vertical axis, the cost of sensors installed in autonomous driving vehicles and infrastructure installed on roads, and the like. As the types or number of these sensors and infrastructure increase, hardware, software, and development costs increase, so the cost becomes larger toward the upper direction of the vertical axis and relatively smaller toward the lower direction. On the other hand, regarding the horizontal axis, costs may increase due to operation costs and the like for ensuring higher productivity and/or convenience. For example, costs may increase due to expenses related to the dissemination and education of operation rules for ensuring productivity and/or convenience, or, in some cases, labor costs and the like.

Additionally, in the requirement candidate graph 304a, an optimal area 304b is displayed, showing the optimal area on the vertical and horizontal axes for the system requirement/operation rule requirement set generally used for the usage selected in the target usage selection area 302. Since the balance between system and operation aspects for achieving safety on the vertical axis and the level (importance) of productivity and/or convenience on the horizontal axis are not actually independently and freely determined but are assumed to have optimal values for each usage, this optimal area 304b can be effectively used as a reference when defining requirements for the autonomous driving system 1.

In the requirement candidate graph 304a, the system builder selects a candidate area 304c corresponding to the desired system requirement/operation rule requirement set from among the plurality of candidate areas 304c. When any candidate area 304c is selected by the system builder, processing is executed by the requirement presentation program 212 (strictly speaking, by the CPU 201 executing the requirement presentation program 212) to target the system requirement/operation rule requirement set corresponding to the candidate area for detailed display, and an output screen 321 (see Fig. 3C) is displayed.

By checking the requirement candidate graph 304a in the requirement setting area 304 of the input screen 301A, it is possible to understand the balance and trade-off relationships of system requirements and operational requirementoperational requirements in multiple candidate system requirement/operation rule requirement sets. For example, in the requirement candidate graph 304a, the relative positioning on the vertical axis (balance between system and operation aspects for achieving safety) and the horizontal axis (productivity and/or convenience) within the same usage, as well as a realistically selectable position (trade-off), can be easily understood from the position of the candidate areas and their positional relationship with the optimal area 304b for the target usage. For example, it is possible to easily understand the cost required to ensure at least a certain level of productivity and/or convenience, and it is also possible to easily understand the upper limit of productivity and/or convenience, system configuration, and the like when suppressing costs below a certain level.

Fig. 3B is a diagram explaining a second example of an input screen according to one embodiment. The input screen 301B in Fig. 3B is a display example when highway logistics is selected as the usage for the autonomous driving system. Note that, in Fig. 3B, parts identical to those in Fig. 3A are denoted by the same reference symbols, and redundant descriptions are omitted.

When highway logistics is selected in the target usage selection area 302, a file name containing driving route information corresponding to the usage is received in the file name reception area 303a, and the upload button 303b is pressed, the file with the file name received in the file name reception area 303a is uploaded to the system implementation support apparatus 100. In the system implementation support apparatus 100, the CPU 201 activates and executes the candidate presentation program 211.

When the candidate presentation program 211 is activated, as a result of processing by this program, a requirement candidate graph 314a showing safety, productivity, convenience, and cost corresponding to the usage is displayed in the requirement setting area 304. The requirement candidate graph 314a displays a plurality of candidate areas 314c corresponding to system requirement/operation rule requirement sets that are candidates for the selected usage and a selected optimal area 314b. This allows the system builder to refer to the requirement candidate graph 314a and select a desired candidate from among the candidates suitable for the usage.

Next, the output screen 321 will be described.

Fig. 3C is a diagram explaining an example of an output screen according to one embodiment. The output screen 321 in Fig. 3C is an example of an output screen displayed when one of the plurality of candidate areas 304c (in this example, the bottom-left candidate area 304c) is selected in the input screen 301A shown in Fig. 3A, where public transportation is selected as the usage. Note that the same output screen is displayed when one of the plurality of candidate areas 314c is selected in the input screen 301B, where highway logistics is selected as the usage.

As described above, the output screen 321 is displayed after processing by the requirement presentation program 212 is executed. The output screen 321 includes a selected balance display area 322, a system requirement display area 323, and an operational requirementoperational requirement display area 324.

In the selected balance display area 322, a selected requirement graph 322a is displayed. The selected requirement graph 322a is a graph similar to the requirement candidate graph 304a, differing only in part. The selected requirement graph 322a includes an optimal area 322b corresponding to the optimal area 304b and a selected area 322c corresponding to one candidate area 304c selected by the system builder from among the plurality of candidate areas 304c. In the example of Fig. 3C, areas corresponding to unselected candidate areas 304c among the plurality of candidate areas 304c are not displayed. However, areas corresponding to unselected candidate areas 304c may be displayed in a manner distinguishable from the selected area (e.g., by lightening the display color). Additionally, in the output screen 321, if a selection instruction is received from the system builder for an unselected candidate area, the output screen 321 may be displayed with the newly selected candidate area as the selected area.

In the system requirement display area 323, details of the system configuration data corresponding to the system requirement/operation rule requirement set selected by the system builder are displayed. The system configuration data is displayed by the system requirement/operation rule requirement presentation program 227 based on the system configuration data 231 as a result of processing by the requirement presentation program 212.

In the operational requirementoperational requirement display area 324, a list of operational requirementoperational requirements corresponding to the system requirement/operation rule requirement set selected by the system builder, and a requirement presentation graph 324a showing values corresponding to each operational requirementoperational requirement are displayed. The requirement presentation graph 324a is created based on the productivity/convenience/cost calculation results 235 calculated and stored by the productivity/convenience/cost calculation program 223 of the candidate presentation program 211. The requirement presentation graph 324a displays the range of values that each operational requirementoperational requirement can take in the system requirement/operation rule requirement set selected by the user. Additionally, the requirement presentation graph 324a includes one or more combination graphs 324b showing combinations of values for each selectable requirement. In the example of Fig. 3C, a combination graph 324b is displayed for operational requirementoperational requirement 1 (number of vehicles), showing combinations of values for other operational requirementoperational requirements corresponding to multiple values of this operational requirementoperational requirement. However, for example, a combination graph showing combinations of values for other operational requirementoperational requirements corresponding to multiple values of another operational requirementoperational requirement selected by the system builder may be displayed.

By checking the selected requirement graph 322a in the selected balance display area 322 of the output screen 321, it is possible to understand the balance and trade-off relationships of system requirements and operational requirementoperational requirements in the system requirement/operation rule requirement set selected by the system builder. For example, in the selected requirement graph 322a, the relative positioning on the vertical axis (balance between system and operation aspects for achieving safety) and the horizontal axis (productivity and/or convenience) within the same usage, as well as a realistically selectable position (trade-off), can be easily understood from the position of the selected area 322c and its positional relationship with the optimal area 322b for the target usage. For example, it is possible to easily understand the cost required to ensure at least a certain level of productivity and/or convenience, and it is also possible to easily understand the upper limit of productivity and/or convenience, system configuration, and the like when suppressing costs below a certain level.

Next, the system configuration data 231 will be described.

Fig. 4A is a diagram illustrating a first example of system configuration data according to one embodiment. Fig. 4B is a diagram illustrating a second example of system configuration data according to one embodiment. Fig. 4A and Fig. 4B show system configuration data for the autonomous driving system 1 when public transportation is assumed as the usage, with Fig. 4A showing a full-set configuration 401, which is the maximum system configuration, and Fig. 4B showing a minimum configuration 402, which is the minimum system configuration.

In the full-set configuration 401, the autonomous driving system consists of a business system, a control center, an emergency notification button, autonomous driving vehicles, infrastructure sensors, gates, traffic signals, and passengers. In the minimum configuration 402, the autonomous driving system is configured by removing infrastructure-side components, namely infrastructure sensors, gates, and traffic signals, from the full-set configuration 401. Note that the system configuration data is not limited to the full-set configuration and the minimum configuration, but may include data for intermediate configurations between the full-set and minimum configurations. Additionally, it is not limited to these relationships and may include, for example, data for configurations having sensors replaced with other sensors.

Note that the system configuration data 231 is not limited to block diagram format data as shown in Fig. 4A and Fig. 4B, but may be data in other description formats, such as UML (Unified Modeling Language).

Next, the usage-specific candidate correspondence table 232 will be described.

Fig. 5A is a diagram illustrating an example of a usage-specific candidate correspondence table according to one embodiment.

The usage-specific candidate correspondence table 232 is a table that manages candidate requirement sets (system requirement/operation rule requirement sets: candidate requirement sets), including system configurations, safety levels, and operational requirementoperational requirement sets for each usage, storing entries for each of the candidate requirement sets. Entry in the usage-specific candidate correspondence table 232 includes fields of a candidate number 501, a usage 502, a system configuration 503, a system safety level 504, and an operational requirementoperational requirement set 505.

The number (candidate number) of the candidate requirement set corresponding to the entry is stored in the candidate number 501. The category of the usage of the autonomous driving system for the candidate requirement set corresponding to the entry is stored in the usage 502. The usage is assumed to be the usage selected or input in the target usage selection area 302 (312) of the input screen 301 (301A, 301B). Specifically, usages include "public transportation," "highway logistics," and the like.

The name of the system configuration data 231 corresponding to the system configuration in the candidate requirement set corresponding to the entry is stored in the system configuration 503. For example, for the candidate requirement set with candidate number 1, where the usage is public transportation, the name of the full-set configuration shown in Fig. 4A is stored. For the candidate requirement set with candidate number 4, the name of the minimum configuration shown in Fig. 4B is stored. For candidate requirement sets with candidate numbers 2 and 3, the names of system configuration data intermediate between the full-set configuration and the minimum configuration are stored. For candidate requirement sets with candidate numbers 5 to 7, where the usage is highway logistics, the names of system configurations (configurations 5 to 7) applicable to this usage are stored.

The degree of safety (safety level) ensured by the system, not by operation or rule-based measures, in the system configuration corresponding to the system configuration name in the system configuration 503 of the entry is stored in the system safety level 504. The safety level is, for example, on a ten-point scale from 1 to 10, with a larger value indicating a higher level of safety ensured by the system. In the example of Fig. 5A, for the candidate requirement set with candidate number 1, the system configuration is the full-set configuration shown in Fig. 4A, so the safety level is the maximum value of "10". Conversely, for the candidate requirement set with candidate number 4, the system configuration is the minimum configuration shown in Fig. 4B, and since safety must be ensured largely on the operation and rule-based side, the system safety level is a small value of "2". Note that the safety level value of the system safety level 504 corresponds to the position on the vertical axis of the candidate area 304c (314c), indicating the candidate requirement set in the two-dimensional map of the requirement setting area 304 (314) in the input screen 301A (301B). For example, a candidate area corresponding to a candidate requirement set with a safety level of "10" is placed at the top of the two-dimensional map, while a candidate area corresponding to a candidate requirement set with a safety level of "1" is placed at the bottom. The safety level may also be an index generally used, such as SIL (Safety Integrity Level).

The name (or ID) of the set of one or more operational requirementoperational requirements (operational requirementoperational requirement set) in the candidate requirement set corresponding to the entry is stored in the operational requirementoperational requirement set 505. In this embodiment, the details of the operational requirementoperational requirement set corresponding to the name of the operational requirementoperational requirement set are registered in the operational requirementoperational requirement set detail table 233.

Note that the same operational requirementoperational requirement set may be used for multiple candidate requirement sets, in which case the same operational requirementoperational requirement set name may be set for multiple candidate requirement sets in the usage-specific candidate correspondence table 232. Additionally, the same system configuration may be used for multiple candidate requirement sets, in which case the same system configuration name may be set for multiple candidate requirement sets in the usage-specific candidate correspondence table 232.

Next, the operational requirementoperational requirement set detail table 233 will be described.

Fig. 5B is a diagram illustrating an example of an operational requirement set detail table according to one embodiment.

Fig. 5B is a table that manages details of operational requirement sets, storing entries for each operational requirement set. Entry in the operational requirement set detail table 233 include fields of a set number 511, a usage 512, an operational requirement set 513, and multiple individual operational requirements (514 to 517 and the like: operational requirement information).

The number (set number) of the operational requirement set corresponding to the entry is stored in the set number 511. The category of the usage of the autonomous driving system in the candidate requirement set corresponding to the entry is stored in the usage 512. Specifically, usages include "public transportation," "highway logistics," and the like.

The name of the operational requirement set corresponding to the entry is stored in the operational requirement set 513. The name of the operational requirement set corresponds to the name of the operational requirement set in the operational requirement set 505 of the usage-specific candidate correspondence table 232.

Each operational requirement (individual operational requirement) included in the operational requirement set is stored in the individual operational requirement. The individual operational requirement includes information indicating whether the individual operational requirement is mandatory (Must) or optional (Option), along with information about the values that the individual operational requirement can take (e.g., a range). Field for individual operational requirement irrelevant to the operational requirement set corresponding to the entry is left unset. In the example of Fig. 5B, the individual operational requirements include operational requirement 1: number of vehicles 514, operational requirement 2: driving speed 515, operational requirement 3: stopping time 516, and operational requirement 4: inter-vehicle distance 517.

Information about requirements for the number of autonomous driving vehicles 120 (number of vehicles) is stored in the operational requirement 1: number of vehicles 514. The requirements for the driving speed of the autonomous driving vehicle 120 is stored in the operational requirement 2: driving speed 515. The requirements for the stopping time of the autonomous driving vehicle 120 is stored in the operational requirement 3: stopping time 516. The inter-vehicle distance (distance between mobile objects) of the autonomous driving vehicle 120 is stored in the operational requirement 4: inter-vehicle distance 517.

For example, in the example of the operational requirement set detail table 233 in Fig. 5B, for set number 1, i.e., operational requirement set A, the requirement for the number of vehicles 514 is mandatory, with the number of vehicles set in the range of 1 to 10, and the requirement for driving speed 515 is mandatory, with the driving speed set in the range of 30 to 60. For set number 4, i.e., operational requirement set D, the requirement for the number of vehicles 514 is mandatory, with the number of vehicles set in the range of 1 to 5, the requirement for driving speed 515 is mandatory, with the driving speed set in the range of 30 to 40, and the requirement for stopping time 516 is optional, with the stopping time set in the range of 30 to 40.

Next, the KPI calculation method data 234 will be described.

Fig. 6 is a diagram illustrating an example of KPI calculation method data according to one embodiment.

The KPI calculation method data 234 is data indicating the relationship between cost, productivity and/or convenience, system configuration, and operational requirements for the autonomous driving system 1 under consideration for implementation. Note that the KPI calculation method data is not limited to the form of a KPI tree but may be in the form of a formula, model, or the like.

The KPI calculation method data 234 shown in Fig. 6 is a KPI tree composed of multiple nodes (shown as ellipses in the figure), including nodes indicating cost, productivity, and convenience at the top level, nodes corresponding to elements (safety equipment) based on the system configuration and nodes corresponding to individual operational requirements at the lower level, and nodes indicating various metrics positioned in between, with lines connecting these nodes to express their relationships. In the KPI tree, when there is a positive causal relationship between nodes, the cause and effect sides are connected by a solid line with an arrow, and in the case of a negative causal relationship, they are connected by a dashed line with an arrow.

Here, since there is a positive causal relationship between the "safety equipment" node and the "implementation cost" node, it indicates that the implementation cost increases as the number of sensors, infrastructure, and the like, in the system configuration increases. On the other hand, as the frequency of vehicle operations of autonomous driving vehicles increases, the waiting time for passengers decreases, so the "operation frequency" node and the "passenger waiting time" node are connected as a negative causal relationship.

Additionally, nodes may have mutual dependencies. For example, as the driving speed of an autonomous driving vehicle increases, the permitted stopping time for the vehicle increases, and conversely, as the stopping time of the vehicle becomes longer, the driving speed of the autonomous driving vehicle needs to be increased. Due to such relationships, the "driving speed" node and the "stopping time" node are connected as having a mutual positive causal relationship. In cases where nodes have a mutual positive causal relationship, the values of the respective nodes are not independent but have a certain relationship (constraint condition).

For the safety equipment node, which is a lower-level node, the node's value is set based on the system configuration corresponding to the target candidate requirement set. For nodes corresponding to individual operational requirements, which are lower-level nodes, the possible values are calculated and set based on information stored in the individual operational requirements (514 to 517) of the operational requirement set detail table 233 corresponding to the target candidate requirement set. In the example of Fig. 6, for the "safety equipment" node, data on the presence or absence of equipment such as sensors and infrastructure is set based on the system configuration data 231 corresponding to the target candidate requirement set. On the other hand, for nodes corresponding to individual operational requirements, such as "number of vehicles," "driving speed," and "stopping time," basically, the range of values obtained from the individual operational requirements (514 to 517) of the operational requirement set detail table 233 is set. However, when there are constraint conditions between nodes, values satisfying the constraint conditions are set for the individual operational requirements.

The productivity/convenience/cost calculation program 223 of the candidate presentation program 211 calculates productivity, convenience, and cost using the information of the KPI calculation method data 234 and the uploaded driving environment data. Specifically, the productivity/convenience/cost calculation program 223 inputs the values of lower-level nodes based on the system configuration corresponding to the system configuration name in the system configuration 503 of the usage-specific candidate correspondence table 232 and the information of individual operational requirements (514 to 517) of the operational requirement set detail table 233, calculates the values of intermediate nodes, and finally calculates the values of the top-level productivity, convenience, and cost nodes.

Here, the values of nodes such as productivity and convenience in the KPI tree depend on the driving environment of the autonomous driving system 1 to be implemented. For example, transportation efficiency for passengers (or cargo) is affected by the length of the driving section or the number of lanes on the driving route. Therefore, the productivity/convenience/cost calculation program 223 performs simulations or model calculations based on the driving environment data to calculate the values of each node in the KPI calculation method data 234. For example, it performs a traffic simulation reflecting map information of the driving environment, inputs the values of lower-level nodes of the KPI tree (such as the number of vehicles) as parameters, and obtains productivity (e.g., transportation efficiency) and convenience from the simulation results.

Next, the processing operations by the system implementation support apparatus 100 will be described.

Fig. 7 is a flowchart of candidate presentation processing according to one embodiment. The candidate presentation processing is executed by the candidate presentation program 211 (strictly speaking, by the CPU 201 executing the candidate presentation program 211).

In step S701, the usage/driving environment setting program 221 reads the usage information selected in the target usage selection area 302 (312) of the input screen 301A, 301B and the driving environment data corresponding to the file name containing the driving route information selected (input) in the site information upload area 303 (313).

In step S702, the candidate extraction program 222 extracts candidate requirement sets from the usage-specific candidate correspondence table 232 based on the usage information read in step S701. Specifically, the candidate extraction program 222 refers to the usage-specific candidate correspondence table 232 and extracts candidate requirement sets based on records where the usage 502 matches the usage obtained in step S701.

For example, when "public transportation" is selected as the usage as shown in Fig. 3A, the candidate extraction program 222 identifies records with candidate numbers 1 to 4, where the usage is "public transportation," from the usage-specific candidate correspondence table 232 and extracts information on the system configuration 503, system safety level 504, and operational requirement set 505 for each identified record. Furthermore, the candidate extraction program 222 obtains the system configuration corresponding to the system configuration name in the system configuration 503 from the system configuration data 231 and obtains the operational requirement set corresponding to the operational requirement set name in the operational requirement set 505 from the operational requirement set detail table 233. For the latter, the candidate extraction program 222 obtains the set of operational requirements from records in the operational requirement set detail table 233 where the usage 512 and the operational requirement set name in the operational requirement set 513 match. Here, a combination of the value of the safety level 504, the system configuration obtained from the system configuration data 231, and the operational requirement set obtained from the operational requirement set detail table 233 corresponds to a candidate requirement set.

In step S703, the productivity/convenience/cost calculation program 223 calculates productivity, convenience, and cost for each of the candidate requirement sets extracted in step S702 based on the driving environment data read in step S701, using data such as the KPI tree, formula, or model shown in the KPI calculation method data 234, and records the calculated results as productivity/convenience/cost calculation results 235 in the storage 205.

For example, when the KPI calculation method data 234 is provided in the form of the KPI tree shown in Fig. 6, the productivity/convenience/cost calculation program 223 may calculate productivity, convenience, and cost, for example, by simulation or other means. In this case, the productivity/convenience/cost calculation program 223 inputs the data (values) of the system configuration data 231 and the individual operational requirements (514 to 517) of the operational requirement set detail table 233 corresponding to lower-level nodes as input parameters to a simulator corresponding to the autonomous driving system 1 under consideration for implementation, executes the simulation, and obtains productivity, convenience, and cost corresponding to the top-level nodes as output results. When the values of operational requirements can have a range, the productivity/convenience/cost calculation program 223 identifies combinations of the possible value ranges for each operational requirement, performs simulations with each combination as input parameters, and obtains calculation results for productivity, convenience, and cost for each combination. However, in cases where operational requirements are not independent, such as 'driving speed' and 'stopping time' in the KPI tree of Fig. 6, i.e., have constraint conditions, the productivity/convenience/cost calculation program 223 does not freely set input parameters within the possible value ranges of each operational requirement but uses combinations of values determined according to their relationship (constraint conditions) as input parameters.

In step S704, the candidate display program 224 causes a requirement candidate graph 304a (314a) to be displayed in the requirement setting area 304 (314) of the input screen 301A (301B) based on the productivity, convenience, and cost data calculated in step S703 for each of the candidate requirement sets.

According to the candidate presentation processing, when "public transportation" is selected as the usage as shown in Fig. 3A, the candidate extraction program 222 extracts the requirement sets corresponding to the entries with candidate numbers 1 to 4 from the usage-specific candidate correspondence table 232 as candidate requirement sets. Next, for these four candidate requirement sets, the productivity/convenience/cost calculation program 223 calculates productivity, convenience, and cost, and records them in the productivity/convenience/cost calculation results 235 in the storage 205. In this case, the candidate display program 224 draws a two-dimensional map of the requirement candidate graph 304a in the requirement setting area 304 of the selected input screen and the optimal area 304b for the selected usage.

In the two-dimensional map of the requirement candidate graph 304a in the requirement setting area 304, the candidate display program 224 draws candidate areas 304c for the four candidate requirement sets, with the vertical axis position corresponding to the value of the system safety level 504 in the usage-specific candidate correspondence table 232, and the horizontal axis position corresponding to the calculated values of productivity and convenience in the productivity/convenience/cost calculation results 235.

Here, as shown in the operational requirement set detail table 233, since individual operational requirements have a range of possible values, the values of productivity and convenience may not be unique, but may take a certain range. In such cases, the candidate display program 224 sets the horizontal width of each candidate area 304c to a width corresponding to the range of productivity and convenience. On the other hand, since the vertical axis is uniquely determined based on the value of the system safety level 504, there is no need to provide a vertical width during drawing. However, in this embodiment, for visibility, the candidate display program 224 draws candidate areas with a certain vertical width.

Furthermore, the candidate display program 224 displays the background of the two-dimensional map by color-coding it based on the cost calculation results in the productivity/convenience/cost calculation results 235 for each of the four candidate requirement sets. Note that the cost display manner may involve displaying the cost calculation results for the four candidate requirement sets as numerical values or the like. Through these processes, the candidate display program 224 causes four candidate areas 304c corresponding to each candidate requirement set to be displayed in the requirement setting area 304 of the input screen 301A, as shown in Fig. 3.

This allows the system builder, together with the business operator (customer) of the implemented autonomous driving system 1, to compare the positions of the candidate areas displayed on the two-dimensional map and the associated costs on the input screen 301A, 301B and select an appropriate one from among the candidate areas. Since the targets on the vertical axis and horizontal axis, and cost often have a trade-off relationship, the system builder and customer can easily and appropriately determine the position to take for the target autonomous driving system 1 by referring to information such as the relative positional relationship with the optimal area 304b for the same usage.

Fig. 8 is a flowchart of requirement presentation processing according to one embodiment. The requirement presentation processing is executed by the requirement presentation program 212 (strictly speaking, by the CPU 201 executing the requirement presentation program 212).

In step S801, the candidate selection program 225 obtains information on the candidate requirement set (referred to as the target requirement set in the description of the requirement presentation processing) selected by the user in the requirement setting area 304 of the input screen (301A, 301B). The information on the target requirement set includes the system configuration (corresponding data in the system configuration data 231) and the operational requirement set (corresponding operational requirement set in the operational requirement set detail table 233) for the target requirement set.

In step S802, the operational requirement estimation program 226 obtains the range of possible values for each operational requirement corresponding to the operational requirement set obtained in step S801 from the productivity/convenience/cost calculation results 235 recorded in the storage 205.

In step S803, the system requirement/operation rule requirement presentation program 227 causes the selected balance display area 322, the system requirement display area 323, and the operational requirement display area 324 to be displayed on the output screen 321. For the system requirement display area 323, the system requirement/operation rule requirement presentation program 227 causes the system configuration corresponding to the system configuration data 231 obtained in step S801 to be displayed.

For example, when "public transportation", is selected as the usage, and the candidate area 304c located at the top, i.e., the candidate requirement set with the full-set configuration, is selected in the requirement setting area 304 of the input screen 301A, the full-set configuration 401 for public transportation shown in Fig. 4A is displayed in the system requirement display area 323 of the output screen 423 as the system configuration.

In the operational requirement display area 324, a list of each operational requirement of the operational requirement set obtained in step S802 and information on the values (range) corresponding to each operational requirement are displayed. As the list of operational requirements, individual operational requirements marked as "Must" in the operational requirement set detail table 233 for the target requirement set are displayed. The range of values for these operational requirements is obtained from the productivity/convenience/cost calculation results 235 calculated by simulation or the like by the productivity/convenience/cost calculation program 223 and displayed, for example, in a graph.

Here, since there may be positive or negative correlations between operational requirements, when the values of each operational requirement have a degree of freedom (range), the combination of values may involve a trade-off. For example, it is possible to choose between increasing the driving speed of autonomous vehicles while also lengthening the stopping time, or reducing the driving speed while also shortening the stopping time. Additionally, a larger trade-off may involve the selection of a candidate requirement set. For example, when a candidate requirement set with a smaller system configuration and lower cost is selected in the requirement setting area 304, the operational requirement display area 324 generally displays more operational requirements with greater constraints as a result.

This allows the system builder or the business operator of the implemented autonomous driving system 1 to comprehensively review the contents of the selected balance display area 322, showing safety, productivity, convenience, and cost, and the operational requirement display area 324 on the output screen 321, thereby easily and effectively making trade-off judgments.

Note that the present invention is not limited to the above-described embodiments and can be appropriately modified and implemented without departing from the spirit of the present invention.

For example, in the above embodiments, input of the usage of the target autonomous driving system was received from the user. However, when the autonomous driving system is used only for a predetermined specific usage, processing may be performed targeting that specific usage without receiving usage input. In this case, a table managing candidate requirement sets for only that specific usage may be prepared instead of the usage-specific candidate correspondence table.

Additionally, in the above embodiments, productivity, convenience, and cost were calculated using the KPI calculation method data 234 in the form of a KPI tree.

However, the method for calculating productivity, convenience, and cost is not limited to this, and any method may be used. When displaying only one of productivity or convenience on the horizontal axis of the requirement candidate graph 304a, only the value of the displayed productivity or convenience may be calculated.

Furthermore, in the above embodiments, the driving environment data specified by the user was used. However, the present invention is not limited to this, and, for example, driving environment data prepared as a default may be used.

Moreover, in the above embodiments, an autonomous driving system was described as an example of the target system to be implemented. However, the target system is not limited to an autonomous driving system and may be, for example, a mobile object system that controls the operation of mobile objects that are not autonomously driven.

Additionally, in the above embodiments, some or all of the processing performed by the CPU 201 may also be performed by a hardware circuit. Furthermore, the programs in the above embodiments may be installed from a program source. The program source may be a program distribution server or a recording medium (e.g., a portable recording medium).

### [Reference Signs List]

- 1: Autonomous driving system
- 10: System implementation support system
- 100: System implementation support apparatus
- 110: Control center
- 120: Autonomous driving vehicle
- 201: CPU
- 202: Communication interface
- 203: Internal bus
- 204: Memory
- 205: Storage
- 211: Candidate presentation program
- 212: Requirement presentation program
- 231: System configuration data
- 232: Usage-specific candidate correspondence table
- 233: Operational requirement set detail table
- 234: KPI calculation method data
- 301A, 302B: Input screen
- 321: Output screen

## Claims

1. A system implementation support apparatus for supporting selection of requirements when a target system is implemented, the system implementation support apparatus comprising:
a processor; and
a storage device, wherein
the storage device is configured to store, for the target system, a plurality of candidate requirement sets, including system configuration information indicating a system configuration, a safety level in the system configuration, and operational requirement information including one or more operational requirements in the system configuration, and
the processor is configured to
calculate a cost and productivity and/or convenience for each of the candidate requirement sets, and
display, for each of the candidate requirement sets in an identifiable manner, a combination of the cost, productivity and/or convenience, and the safety level in the system configuration, as trade-off factors.

2. The system implementation support apparatus according to claim 1, wherein
the processor is configured to
receive, from a user, a selection of a candidate requirement set to be displayed in detail from among the plurality of candidate requirement sets, and
display, for the selected candidate requirement set, the system configuration information, a list of operational requirements included in the operational requirement information, and a combination of possible values for each of the operational requirements.

3. The system implementation support apparatus according to claim 1, wherein
the target system is a mobile object system configured to manage the movement of a predetermined mobile object, and
the processor is configured to
obtain mobility environment data about the environment in which the mobile object moves and
calculate, based on the mobility environment data, the cost and productivity and/or convenience for each of the candidate requirement sets.

4. The system implementation support apparatus according to claim 3, wherein
the storage device is configured to store a plurality of the candidate requirement sets for each usage of the target system, and
the processor is configured to
receive a usage designation from a user,
calculate the cost and productivity and/or convenience for each of the candidate requirement sets corresponding to the designated usage, and
display, for each of the candidate requirement sets in an identifiable manner, a combination of the cost, productivity and/or convenience, and the safety level in the system configuration, as trade-off factors.

5. The system implementation support apparatus according to claim 1, wherein
the storage device is configured to store KPI calculation method data indicating a method for calculating the cost and productivity and/or convenience in the target system, and
the processor is configured to calculate, based on the KPI calculation method data, the cost and productivity and/or convenience for each of the candidate requirement sets.

6. The system implementation support apparatus according to claim 1, wherein
the processor is configured to display, for each of the candidate requirement sets by a graph, a combination of the cost, productivity and/or convenience, and the safety level in the system configuration, as trade-off factors, with the safety level on a first axis, the productivity and/or convenience on a second axis, and a background formed by the first axis and the second axis representing a cost-indicating area.

7. The system implementation support apparatus according to claim 1, wherein
The target system is a mobile object system configured to manage the movement of a predetermined mobile object, and
the one or more operational requirements include at least one of a number of mobile objects, a driving speed of the mobile object, a stopping time of the mobile object, and a distance between mobile objects.

8. The system implementation support apparatus according to claim 1, wherein
the target system is an autonomous driving system configured to manage autonomous driving of a predetermined mobile object.

9. A system implementation support method by a system implementation support apparatus for supporting selection of requirements when a target system is implemented, wherein
the system implementation support apparatus is configured to store, for the target system, a plurality of candidate requirement sets, each including system configuration information indicating a system configuration, a safety level in the system configuration, and operational requirement information including one or more operational requirements in the system configuration, and
the system implementation support apparatus is configured to
calculate a cost and productivity and/or convenience, for each of the candidate requirement sets, and
display, for each of the candidate requirement sets in an identifiable manner, a combination of the cost, productivity and/or convenience, and the safety level in the system configuration, as trade-off factors.

10. A system implementation support program for causing a computer constituting a system implementation support apparatus for supporting selection of requirements when a target system is implemented to execute, wherein
the computer is configured to store, for the target system, a plurality of candidate requirement sets, each including system configuration information indicating a system configuration, a safety level in the system configuration, and operational requirement information including one or more operational requirements in the system configuration, and
the system implementation support program causes the computer to calculate a cost and productivity and/or convenience for each of the candidate requirement sets, and to display, for each of the candidate requirement sets in an identifiable manner, a combination of the cost, productivity and/or convenience, and the safety level in the system configuration, as trade-off factors.
